# EUROPEAN PATENT APPLICATION

(11) **EP 4 745 635 A1**
(43) Date of publication of application: **20.05.2026**
(21) Application number: 24213051.6
(22) Date of filing: 14.11.2024
(51) Int. Cl.: G02B 6/02

(54) **PHOTONIC CRYSTAL FIBER WITH INTEGRATED MODE ADAPTOR**

(71) Applicant: NKT Photonics A/S, 3460 Birkerød (DK)
(72) Inventor: Jens Kristian, LYNGSØE, 3460 Birkerød (DK)
(74) Representative: Zacco Denmark A/S

(57) **Abstract**

An optical fiber for mode adaption, comprising: a first longitudinal section extending from a first end facet, said first longitudinal section being configured to guide a first mode; a second longitudinal section extending from a second end facet, said second longitudinal section being configured to guide a second mode; a third longitudinal section located between said first and second sections; a cladding background material having a refractive index n₁; a first cladding region comprising solid cladding features arranged in the cladding background material, said solid cladding features having a refractive index n₂, wherein n₂ is lower than n₁, said first cladding region being configured to confine said first mode to a first core region, a second cladding region comprising thermally collapsible holes arranged in the cladding background material, said second cladding region being configured to confine said second mode to one or more second core regions; wherein said third longitudinal section comprises at least partially collapsed thermally collapsible holes.

## Description

### FIELD OF THE INVENTION

The present invention relates to an optical fiber; a preform for producing an optical fiber; a method of producing an optical fiber comprising drawing of the preform; a heat-treated optical fiber; an article comprising an optical fiber. In particular, the invention relates to such fiber products and methods being photonic crystal fibers including thermally collapsible holes or voids.

### BACKGROUND

The class of optical fibers known as Photonic Crystal Fibers (PCFs), also called micro-structured optical fibers, has gained significant popularity and has found many applications in recent years. The optical guiding mechanism in these fibers is provided by introducing a number of holes or voids in a background material of the optical fibers. These holes typically run parallel with the fiber and extend along the fiber length.

The light guiding principle can be based on Total Internal Reflection (TIR) similar to the guiding principle of traditional optical fibers (non-microstructured optical fibers, also referred to as 'standard optical fibers' in the following), which do not comprise such holes, or it can be based on the Photonic Band Gap (PBG) principle.

For TIR-based optical fibers, where the core is surrounded by a cladding region comprising holes, such as a number of closely spaced holes, the core may comprise a solid glass region, which has a larger refractive index than the effective refractive index of the cladding region due to the hole structures.

For PBG-based optical fibers, the core is not limited to a solid material. It can be a hole, or a combination of a solid background material and holes, surrounded by a cladding region comprising a Photonic Band Gap. The refractive index of the core can take values down to that of air, since the guiding of light along the optical fiber is enabled by the fact that light cannot propagate through the cladding region. Consequently, light is confined within the core. The cladding region may comprise a cladding material and an arrangement of air holes of predetermined hole size, distance and pattern.

In general, the holes or voids may be any feature comprising a material having a refractive index different from that of the background material. Typically, the holes or voids have a refractive index below that of the background material. The holes or voids may comprise a solid material, a gas such as air, a liquid or a vacuum.

The air holes, or features, in the cladding may influence the optical properties of the optical fibers. In some fiber designs, the influence from the air holes dominates the influence from other factors in relation to the optical properties of the optical fibers. In general, these types of optical fibers will in the following be called photonic crystal fibers (PCFs). Optical fibers of this type are also known as microstructured fibers. The terms holey fibers, photonic band gap fibers, hole-assisted optical fibers, as well as other names may be used.

PCFs may have characteristics quite different from conventional, solid glass optical fibers and thus find applications in a range of different fields.

Transition from small core PCFs to standard optical fibers is generally difficult. Splice losses are typically high, and the mechanical strength is often poor.

Tapering of the features of the PCF such as decreasing the diameters of various features along a segment of the length of a fiber may be used to provide low-loss transition coupling from PCF to standard optical fibers. Such tapering of the features is also known simply as the tapering of the PCF even though it is to be understood that the outer diameter of the fiber may remain substantially unchanged along the length of the fiber. However, tapering is time-consuming and laborious work involving manufacturing of tapered optical fiber regions.

Existing mode adaptors according to the state of the art typically requires splicing at a first end to a PCF and at a second end to another optical system such as a standard optical fiber. However, such splices might introduce losses in the optical system. Furthermore, splices may be prone to breaking, thereby increasing the risk of failure of the optical system. This risk increases with the number of splices present along the path of the propagating light.

Furthermore, the tapering solutions known in the art have limitations regarding the wavelength which may be propagated along the PCF as the efficient mode adaptation is limited to a single wavelength for the specific adapter making it necessary to design individual adaptors for each wavelength making the process time-consuming and costly.

When working with the generation of supercontinuum it is necessary to be able to guide a spectrum of wavelengths, whereby the known systems have been severely limiting when guiding only laser light at the pump wavelength.

Additional limitations of the mode adapters based on tapered PCFs known in the art is that as the diameter of the inner holey cladding comprising holes or voids defines the core size of the fiber when collapsed, the diameter of the inner holey cladding is limited. Namely, if the holey inner cladding is large, the core of the collapsed fiber may be too large to be suitable for single mode propagation. However, the thin inner holey cladding leads to high leakage loss making such fibers unsuitable for most highly nonlinear fibers.

### SUMMARY OF THE INVENTION

It is an object of the present invention to provide an improved method of coupling a photonic crystal fiber to an optical component, in particular to an optical fiber such as a photonic crystal fiber, a non-microstructured optical fiber, or another optical component.

A further object of the present invention is to devise improved photonic crystal fiber designs for controlling the mode profile at the end of the fiber, such as to control a mode expansion at the end of the fiber.

It is an object of the present invention to provide PCFs that can be spliced with low loss and/or high strength to other optical fibers, such as standard optical fibers. Especially, it is an object to provide small core PCFs that can be spliced with low loss and/or high strength to standard optical fibers.

It is an object of the present invention to provide PCFs that allow tapering of modes along the length of the fiber and propagation of a mode along the fiber such that at least one splicing may be foregone whereby the overall loss of the optical system may be decreased. In other words, it is an object of the present invention to provide a fiber merging the properties of a mode adapter and a single mode fiber, preferably a single mode highly nonlinear fiber.

Numerous further objects and advantages, which will be evident from the description of the present invention, are according to a first aspect of the present invention obtained by:
An optical fiber configured for mode adaption, said optical fiber comprising:
- a first longitudinal section extending from a first end facet, said first longitudinal section being configured to guide a first mode having a first mode field diameter (MFD);
- a second longitudinal section extending from a second end facet, said second longitudinal section being configured to guide a second mode having a second mode field diameter (MFD);
- a third longitudinal section located between and connecting said first longitudinal section and said second longitudinal section;
- a cladding background material having a refractive index n₁
- a first cladding region comprising solid cladding features arranged in the cladding background material, said solid cladding features having a refractive index n₂, wherein n₂ is lower than n₁, said first cladding region being configured to confine said first mode of said first longitudinal section to a first core region,
- a second cladding region comprising thermally collapsible holes arranged in the cladding background material, said second cladding region being configured to confine said second mode to one or more second core regions;

wherein said first cladding region extends along said optical fiber, such as along the full length of said optical fiber, and wherein said first core region extends along said first longitudinal section; and
wherein said second cladding region extends along said second longitudinal section and said second core region extends along said second longitudinal section; and
wherein said third longitudinal section comprises at least partially collapsed thermally collapsible holes.

In the context of the present invention a background material may be understood to be a single material, which constitutes the majority of the region which it is the background material of as measured by the fraction of the cross-sectional area of the solid part of the region that is made of this particular material. Hence, the background material may be the solid material which makes up at least 50% of the cross-sectional area, such as at least 60% of the cross-sectional area, such as at least 70% of the cross-sectional area, such as at least 80% of the cross-sectional area, such as at least 90% of the cross-sectional area, such as at least 95% of the cross-sectional area. The background material may in some variants comprise two materials with similar refractive indices, such as refractive indices which differ by less than about 10%, such as less than about 5%, such as less than about 2%, such as less than about 1%, such as less than about 0.5%, such as less than about 0.1 %, such as less than about 0.05%.

In a preferred variant the cladding background material is silica glass.

In the context of the present invention, the phrase end facet may refer to the free end of an optical fiber or it may be part of a fiber splice where said end facet is arranged at the splice joint.

The optical fiber according to the invention extends in a longitudinal direction from a first end facet to a second end facet. The optical fiber is divided into three longitudinal section: a first longitudinal section extending from the first end facet, a second longitudinal section extending from the second end facet, and a third longitudinal section interposed between and connecting the first and second longitudinal sections. The length of the optical fiber and each longitudinal section may vary depending on the preferred use of the optical fiber. Typically, the first longitudinal section will be shorter than the second longitudinal section. The length of the third longitudinal section will be chosen such that it is sufficient to facilitate the adiabatic collapse of holes along the third longitudinal section. The distance from the first end facet of the fiber to the open end where the thermally collapsible holes are fully open, i.e. where their cross-sectional dimension is maximal, may also be called the collapsed length.

In a preferred variant of the first aspect of the invention, the thermally collapsible holes are collapsed over a collapsed length from the first end facet.

In a preferred variant of the first aspect of the invention, the longitudinal distance between the first end facet and the second end facet is more than twice the collapsed length.

In a preferred variant of the first aspect of the invention, the length of the second longitudinal section is at least twice the combined length of the first and third longitudinal sections, such as at least five times their combined length.

By having the distance between the first end facet and the second end facet being more than twice as long as the collapsed length, such that the second longitudinal section is more than twice as long as the combined length of the first longitudinal section and the third longitudinal section, the optical fiber may be used to guide light in the second core region, such as single mode light over a length to deliver the light where necessary rather than requiring a splice at each end of the optical fiber, thereby decreasing the loss introduced by the optical fiber. Furthermore, for some preferred variants the length of the second longitudinal section is chosen to be long enough to generate a supercontinuum by the propagation of light along the second core region.

The thermally collapsible holes may also be referred to as thermally collapsible voids, first cladding features or simply holes. By thermally collapsible holes are, in the context of the present invention, understood features which will shrink or contract when subjected to heating, and which may contract to the point of being eradicated when subjected to sufficient heating. When a hole or void is eradicated or fully collapsed the surrounding material in which the hole or void was arranged, e.g. the background material such as the cladding background material, will be solid at the radial position where the hole or void were present before being subjected to heating.

In a preferred variant of the optical fiber according to the first aspect of the invention, the thermally collapsible holes or voids are fully collapsed or eradicated at the first end facet of the optical fiber.

As appreciated within the field of microstructured fibers, the term "air holes" of the cladding and/or in the core may include holes or voids comprising a vacuum, gas or liquid, said holes or voids being fully or partly filled with a liquid or a gas after production of the microstructured optical fiber.

By thermally collapsible holes or voids is in the present context understood holes or voids that comprise a gas or vacuum or a liquid which can be removed e.g. by evacuation, and which are surrounded by a material that may soften when heated.

The solid cladding features are substantially solid by which is in the present invention understood that the feature in cross section comprises at least about 60% solid material, such as at least about 70% solid material, such as at least about 80% solid material, such as at least about 90% solid material, such as at least about 95% solid material, such as at least about 98% solid material, such as being completely solid.

In a preferred variant the solid cladding features comprise substantially solid down doped silica, such as F-doped silica, with a refractive index n₂.

The thermally collapsible holes and the solid cladding features may each take any of a number of different shapes and sizes, such as those known from photonic crystal fiber technology, including so-called leaky channel designs.

The collapsing of the thermally collapsible holes occurs along the third longitudinal section connecting the first and second longitudinal section. At each cross-section along the third longitudinal section the thermally collapsible holes are at least partially collapsed, the collapse proceeding toward the first longitudinal section such that the cross-sectional dimension of each thermally collapsible hole is smaller at longitudinal positions closer to the first longitudinal section. The gradual collapse of the thermally collapsible holes toward the first end section allows the expansion of the mode field of a guided mode to be adiabatic. Hence, in preferred variants the third longitudinal section is configured to allow adiabatic adaptation between the first mode and the second mode.

When the holes are at least partially collapsed, the effective refractive index is raised. Along the third longitudinal section as the holes are gradually one or more inner layers or rings of thermally collapsible holes surrounding the core region may at least partially collapse such that for at least part of the third longitudinal section the refractive index of the area surrounding the second core region may become comparable to the effective refractive index of the second core region. The collapsed part of the second cladding region adjacent the second core region may appear as one continuous core region expanding into the cross-sectional diameter of the first core region. Hence the cross section the first core region may be seen as comprising the second core region and a part of the second cladding region wherein the thermally collapsible holes are collapsed. The first core region may preferably be delimited by the presence of solid cladding features of solid down-doped silica, such that the first core region is encircled by a collapsed cladding region having a lower refractive index than that of the second core region.

The first cladding region preferably extends along the full length of the optical fiber such that solid cladding features are continuously present throughout the first longitudinal section, the third longitudinal section and the second longitudinal section while the thermally collapsible holes are at least partially collapsed throughout the first longitudinal section and the third longitudinal section, such that they are only present in third fully open form in the second longitudinal section. It will be understood that as the thermally collapsible holes are at least partially collapsed the decrease of their cross-sectional dimension will affect the distance between solid cladding features which may move closer to each other, the solid cladding features may dominate the effective refractive index in the absence of the thermally collapsible holes or as the thermally collapsible holes are sufficiently collapsed regardless of the altered pitch of the solid cladding features.

In the present context there is made a distinction between the term "refractive index" and the term "effective refractive index".

The refractive index is the conventional refractive index of a homogeneous material. The effective refractive index is the index that light at a given wavelength, λ, experiences when propagating through a given material that may be complex (meaning that the material complex comprises two or more sub-materials, typically a background material of one refractive index and one or more types of features of different refractive index/indices). For homogeneous materials, the refractive index and the effective refractive index will naturally be similar. For complex materials (such as microstructures), the effective refractive index is further discussed below. The term refractive index is also used to describe the refractive index of a sub-material in a complex material (such as the refractive index of a feature in a microstructured material). The effective refractive index is generally not identical to the "weighted refractive index" or "geometrical index". These may be determined directly from geometric calculations for a given complex material when the refractive indices of the sub-materials are known.

For the second longitudinal section of the optical fiber where the thermally collapsible holes are present in their uncollapsed or open form, i.e. at distances beyond the collapsed length from the first end facet, the refractive index of the cladding region is dominated by the holes or voids. By the refractive index being dominated by the holes is understood that the effective refractive index will be closer to that of the holes than to that of the material in which the holes are distributed. Thus, the second mode is confined to the second core region by the effective refractive index of the second core region being dominated by the refractive index of the thermally collapsible holes.

For other parts of the optical fiber where the holes or voids are sufficiently collapsed, the effective refractive index will be dominated by the refractive index of the solid cladding features. The solid cladding features will dominate the effective refractive index of at least the first longitudinal section. Thus, the first mode is confined to the first core region by the effective refractive index of the first cladding region being dominated by the solid cladding features.

Having a cladding region comprising both thermally collapsible holes and solid cladding features dispersed in a cladding background material is beneficial, as it allows the control of the effective refractive index depending on the longitudinal position along the optical fiber. As the thermally collapsible holes are at least partially collapsed at some longitudinal positions, it is altered along the length of the optical fiber which cladding features dominate the refractive index. The tipping point of which features dominate the effective refractive index of the cladding occurs at a longitudinal position of the third longitudinal section.

Preferably the optical fiber is adapted such that a first mode guided in the first longitudinal section is confined by an effective index profile determined by background materials of the first core region and the first cladding region comprising at least solid cladding features comprising down doped silica; the index profile providing a first core region being radially expanded compared to the second core region whereby it is obtained that light is expanded to an increased first mode field diameter suitable for efficient/low loss coupling of e.g. splicing and connectorization. Light propagating through the optical fiber towards the first end facet may in this situation spread out from the second core region to at least partially fill the first core region at the first end facet. Light guided in the fiber may be expanded over the third longitudinal section. Hence, coupling to an optical component having a mode field diameter substantially matching the first mode field diameter at the first end facet is possible with a low loss. Similarly, coupling to an optical component having a mode field diameter substantially matching the second mode field diameter at the second end facet is possible with a low loss. Furthermore, the second longitudinal section may be a highly nonlinear fiber enabling generation of a supercontinuum such that light guided with a first mode field diameter may be coupled with low loss to the optical fiber of the invention at the first end facet whereupon it may be adiabatically tapered to a second mode field diameter and used for the generation of a supercontinuum.

Control over the extent of the collapse of the holes provides a further control of the index profile at the first end facet in addition to controlling the index profile via e.g. the refractive indices of the materials of the cladding regions.

According to a preferred variant of the first aspect of the invention, all of the thermally collapsible holes are fully collapsed in the first cladding region, such that no thermally collapsible holes are present in the first cladding region.

In a preferred variant the guided mode will comprise a wavelength λ in the range from 0.35 µm to 2.5 µm. In a more preferred variant, the guide mode will comprise a spectrum of wavelengths, such as a spectrum of wavelengths falling within the range from 0.35 µm to 2.5 µm, such as from 0.35 µm to 2.0 µm, such as from 0.4 µm to 2.0 µm.

In one variant, a guided mode of the optical fiber has a mode field diameter of less than about 5 µm at the second longitudinal section and a mode field diameter of more than about 5 µm at said first longitudinal section, such as more than about 7 µm, such as more than about 9 µm, such as more than about 12 µm, such as more than about 15 µm. Said mode field diameter may be less than about 1000 µm at said first longitudinal section, such as less than about 500 µm, such as less than less than about 250 µm.

In one variant, a guided mode of the second longitudinal section of the optical fiber has a mode field diameter of less than 5 µm such as less than 4 µm such as approximately 3 µm. Preferably at other positions being within a collapsed length of the first end facet where the thermally collapsible holes have been at least partially collapsed the mode field diameter may be more than 3 µm such as more than 5 µm, such as more than 10 µm, such as preferably 15 µm.

In one variant, the first core region has a cross-sectional dimension, r_{PCF}, being in the range of 0.8 µm to 5.0 µm. In one variant, the largest cross-sectional dimension, r_{PCF}, is smaller than 3.0 µm, for example in a case where the optical fiber is used for generation of nonlinear effects.

With the collapse of the thermally collapsible holes at the first longitudinal section, the largest cross-sectional dimension is expanded such that the first core region is larger than the second core region and the optical fiber may couple light with low loss to other optical components in spite of the small size of the second core region.

In one variant, the second core region has a cross-sectional diameter which is in the range of 1.0 µm to 5.0 µm, such as 2.0 µm to 4 µm, such as 2.5 µm to 3.5 µm, such as approximately 3.0 µm.

The largest cross-sectional dimension of the first core region at the first end facet may be in the range of about 2.0 µm to about 20.0 µm, such as in the range of about 5.0 µm to about 17 µm, such as in the range of about 7.0 µm to about 15 µm, such as in the range of about 10.0 µm to about 15 µm.

It will be understood that the largest cross-sectional dimension of the first core region is defined by the cross-sectional dimension of the second core region and the distance from the second core region to the innermost solid cladding features.

In a preferred variant the cross-sectional diameter of the second core region may be about 3.0 µm while the cross-sectional diameter of the first core region is about 15 µm. In an equally preferred variant, the cross-sectional diameter of the second core region may be about 3.0 µm while the cross-sectional diameter of the first core region is about 10 µm.

According to a further embodiment of the first aspect of the invention, the first cladding region and the second cladding region at least partially overlap in the radial direction along the second longitudinal section, such that the thermally collapsible holes and the substantially solid cladding features are interspersed.

By the second cladding region and the first cladding region overlapping may be understood that thermally collapsible holes and the solid cladding features are interspersed in the radial direction throughout the overlapping segment.

According to a preferred variant of the first aspect of the invention, the first cladding region and the second cladding region are partially overlapping in the radial direction along the second longitudinal section.

By limiting the overlap of the first and second cladding regions to be partial, it is possible to alter the radial dimension of the cladding region by collapsing the thermally collapsible holes e.g. the cross-sectional dimension of the core region may be altered as the thermally collapsible holes closest to the center of the optical fiber are collapsed.

A benefit of the overlap of the second cladding region and the first cladding region, is that the thermally collapsible holes may dominate the effective refractive index of the cladding region simultaneously with the solid cladding features being present. This may simplify the production of the optical fiber as the fiber may be formed as a single structure whereupon the first longitudinal section and the third longitudinal section may be altered by heating to facilitate the thermal collapse of the holes.

At positions where the collapse of the thermally collapsible holes are not fully collapsed, the cladding regions may be seen as having solid cladding features held inside a holey cladding. When the holes are sufficiently open, e.g. at the second longitudinal section, the thermally collapsible holes dominate refractive index of the cladding region. At positions near the first end facet of the optical fiber where the holes are at least partially collapsed, e.g. in the first longitudinal section, the solid cladding features dominate such that they confine the light to the first core region.

A benefit of interspersed arrangement of the thermally collapsible holes and solid cladding features is that the mode field diameter of the first longitudinal section is independent of the number of rings or layers of thermally collapsible holes present in the second longitudinal section. The number of rings of thermally collapsible holes around the second core region is essential to how well-confined the first mode is, i.e. to minimizing the loss and leakage. If the rings of thermally collapsible holes had to be surrounded by the solid cladding features without any overlap of the first and second cladding regions, the number of rings of thermally collapsible holes, i.e. the radial width of the s, would define the dimensions of the first core region, such that more rings of thermally collapsible holes would lead to a larger first core region where the holes were collapsed. Hence, the present invention where the first and second cladding regions overlap allows increased freedom of the design of the microstructured optical fiber as the dimensions of the first and second core regions may be freely engineered.

According to a further embodiment of the first aspect of the invention, the majority of the thermally collapsible holes of the second longitudinal section have a neighboring solid cladding feature.

According to a further embodiment of the first aspect of the invention, at least one thermally collapsible hole of the second longitudinal section being surrounded by solid cladding features. In a preferred variant at least one of thermally collapsible hole is arranged at the center of a hexagonal structure of solid cladding features.

In a preferred embodiment of the first aspect of the invention, said the first mode field diameter (MFD) is larger than the second mode field diameter (MFD).

It is preferrable that light may be coupled with low loss from a relatively small second core region of the second longitudinal section of the optical fiber of the present invention to a relatively large core region of another optical fiber. This low loss coupling may be realized by using an optical fiber according to the present invention as the small-core optical fiber and expanding the core mode at the first end facet arranged in relation to the other optical fiber with the relatively larger core. The mode expansion may then be realized by collapsing the holes in at least a part of the cladding region. Low loss coupling may be realized when the mode field diameter of the first core region of the optical fiber according to the present invention and the other optical fiber with the relatively larger core becomes sufficiently identical, such as substantially identical.

Generally, a coupling can be accomplished in any suitable way which allows a low-loss transmission of light to/from one optical component to another. Such methods include fusion, free space optics, index matching glue, splicing, etc.

In one variant, the coupling comprises fusing at the first end facet of the optical fiber and the optical component whereby the optical fiber can be coupled to the optical component with a low loss and with large mechanical strength.

Collapse of the thermally collapsible holes may occur before or after the optical fiber is coupled to the other optical component. That is the first end facet may be coupled to the optical component before the collapsible holes are collapsed or the first end facet may be coupled to the optical component after the collapsible holes are collapsed. The collapse may also occur while the first end facet is coupled to the optical component such that the heating applied to facilitate the coupling of the optical fiber and the optical component also provides the collapse of the holes.

In a preferred embodiment of the first aspect of the present invention, the second longitudinal section comprises a plurality of parallel core regions each configured to guide a mode having a second mode field diameter.

In another variant the second longitudinal section may comprise a plurality of parallel core region configured to guide modes having different mode field diameter, at least one of those mode field diameters being the second mode field diameter.

For such variants having a plurality of parallel core regions, the second longitudinal section becomes a multicore fiber. In a preferred variant the second longitudinal section comprises three parallel cores regions.

Due to the adiabatic collapse of the thermally collapsible holes along the third longitudinal section it becomes possible for the first mode to be directed into multiple cores of the second longitudinal section.

According to an embodiment of the first aspect of the invention, the second cladding region comprises a first type of thermally collapsible holes and a second type of thermally collapsible holes.

According to an embodiment of the first aspect of the invention, the majority of the first type of thermally collapsible holes being arranged closer to the center of the of the optical fiber than a majority of the second type of thermally collapsible holes.

According to an embodiment of the first aspect of the invention, the first type of thermally collapsible holes having smaller cross-sectional dimensions than the second type of thermally collapsible holes.

According to an embodiment of the first aspect of the invention, a majority of the first type of thermally collapsible holes are arranged with a smaller pitch than the majority of the second type of thermally collapsible holes.

The second cladding region may comprise at least two types of thermally collapsible holes, such as a plurality of a first type of thermally collapsible holes and a plurality of a second type of thermally collapsible holes. The first and second types of thermally collapsible holes may differ in various ways such as their cross-sectional dimensions and/or pattern of arrangement in the cladding background material. Thus, having multiple types of thermally collapsible holes allows engineering of the refractive index of the cladding regions and the collapse of the thermally collapsible holes such as the order in which they collapse.

The first type of thermally collapsible holes may have a different cross-sectional dimension than a second type of thermally collapsible holes. For circular holes or voids, the cross-sectional dimension is typically a diameter. For a non-circular cross-section of a hole, the cross-sectional dimension may refer to the circle circumscribing a cross-section of the hole. When thermally collapsible holes have different cross-sectional dimensions, the result of using a heat treatment process, may be that the lengths over which cladding features of the different types, collapse may be controlled individually.

For example, by one or more innermost rings of thermally collapsible holes being of a first type of thermally collapsible holes having a smaller cross-sectional dimension than the remaining, outer rings of thermally collapsible holes being of a second type of thermally collapsible holes, it may be ensured that the first type of thermally collapsible holes are fully collapsed closer to the second longitudinal section than the second type of thermally collapsible hole. This may also be referred to as the first type of thermally collapsible holes collapsing sooner or first compared to the second type of thermally collapsible holes. When the first type of thermally collapsible holes, being radially closest to the center of the optical fiber, are collapsed, the cross-sectional dimension of the core is increased before the refractive index of the cladding region is effectively changed to be dominated by that of the solid cladding features.

A guided mode propagating in the third longitudinal section towards the first end facet may hence be expanded, such that there is an increase in the mode field diameter, at the position where the first type of thermally collapsible holes are collapsed. The collapse of the first type of thermally collapsible holes may be gradual such that light propagating in the third longitudinal section is adiabatically coupled to the first core region, such that a coupling loss of light at the transition from the second core region to the first core region is kept at a minimum, whereby losses of light travelling at any wavelength along the optical fiber to the collapsed fiber end may be low or negligible. The coupling loss may be less than about 2 dB, such as less than about 1 dB, such as less than about 0.5 dB, such as less than about 0.3 dB, such as less than about 0.2 dB, such as less than about 0.1 dB, such as less than about 0.05 dB, or smaller. The adiabatic transition from light being guided in the second core region to being guided in the first core region may be realized by adjustment of the heat treatment process for the collapse of the thermally collapsible holes and/or optimization of fiber design parameters, such as hole dimensions and positions, relative position of different types of thermally collapsible holes and/or of the positioning of the solid cladding features, e.g. to determine the cross-sectional dimension of the first and second core region, respectively.

According to a preferred variant, the first type of thermally collapsible holes has a smaller cross-sectional dimension than the second type of thermally collapsible holes, and the first type of thermally collapsible holes are arranged closer to the second core region than the second type of thermally collapsible holes, and the first type of thermally collapsible holes has a smaller pitch than the second type of thermally collapsible holes.

By having a first type of thermally collapsible holes which are smaller than a second type of thermally collapsible holes arranged closer to the second core region than the second type of thermally collapsible holes, the first type of thermally collapsible holes may be defining and delimiting the second core region when not collapsed. At the same time, the first type of thermally collapsible holes may be collapsed before the second type of thermally collapsible holes such that they are collapsed further form the first end facet then the second type of thermally collapsible holes. Hence, the cross-sectional dimension of the first core region may be achieved while the second type of thermally collapsible holes, possibly being partially collapsed, are dominating the effective refractive index. The configuration of various types of thermally collapsible holes may support the adiabatic transition from a first mode field diameter to a second mode field diameter of light guided along the optical fiber.

By varying the pitch of the thermally collapsible holes the confinement of the guided light may be controlled. In a preferred variant the first type of thermally collapsible holes are smaller than the second type of thermally collapsible holes and the pitch between the first type of thermally collapsible holes is smaller than the pitch between the second type of thermally collapsible holes. In a preferred variant the pitch between the first type of thermally collapsible holes is half the pitch of the second type of the thermally collapsible holes.

Smaller pitch may ensure confinement of the light guided in the second core region also when the first type of thermally collapsible holes are small. Such a configuration is particularly beneficial when guiding single mode light along the optical fiber. In such a configuration the optical fiber may be considered depressed clad.

In one variant the second cladding region may comprise a second type of thermally collapsible holes arranged such that they substantially surround the first type of thermally collapsible holes. The second type of thermally collapsible holes may be arranged such that they substantially surround the solid cladding features comprising solid material with refractive index n₂.

According to a variant of the first aspect of the invention, each thermally collapsible hole of the second type has a neighboring solid cladding feature.

According to a variant of the first aspect of the invention, each adjacent thermally collapsible hole of said second type has a solid cladding feature between them.

According to a further embodiment of the first aspect of the invention, the substantially solid cladding features are arranged in rows having alternating pitch. In some variants the pitch of a first row of substantially solid cladding features being twice the pitch of a second row of substantially solid cladding features. It will be understood to the person skilled in the art that the arrangement of the solid cladding features is described in an idealized patter, however as the background material contracts due to the collapse of thermally collapsible holes the dimensions may alter from the nominal target structure.

According to a further embodiment of the first aspect of the invention, a plurality of the solid cladding features have at least three neighboring thermally collapsible holes at positions along the second longitudinal section.

Collapsing of the thermally collapsible holes or voids can be accomplished in a number of different ways. Common for these methods is that heat is used to soften the background material(s) whereby the thermally collapsible holes or voids contract. Surface tension, evacuation of fluids by pressure control and/or other means may assist in the contraction.

Generally heating can be accomplished in any suitable way whereby energy is conveyed to the cladding region such as thermal, inductive, radiative absorption or other means.

In one variant, the heating is provided by a fusion splicer whereby commercially available equipment suitable for controlling the heat treatment can be used.

In one variant, the optical fiber is a non-linear optical fiber.

According to a further embodiment of the first aspect of the invention, the second longitudinal section of the optical fiber is a highly nonlinear fiber configured to generate a **supercontinuum.**

According to a further embodiment of the first aspect of the invention, the optical fiber is configured for guiding light with wavelengths in the range of about 400 nm to about 2500 nm. Advantageously, the optical fiber is configured for guiding all wavelengths in the aforementioned range of wavelengths.

While the optical fiber of the present invention may be used for any wavelength including a spectrum of wavelengths, for some applications of the optical fibers of the present invention, the most important optical wavelengths are in the visible to near-infrared regime (wavelengths from approximately 350 nm to 2.5 µm). In this wavelength range most relevant materials for fiber production (e.g. silica) may be considered mainly wavelength independent, or at least not strongly wavelength dependent. However, for nonhomogeneous materials, such as fibers with voids or holes such as air holes, the effective refractive index may be very dependent on the morphology of the material. Furthermore, the effective refractive index of such a fiber may be strongly wavelength dependent. The procedure of determining the effective refractive index at a given wavelength of a given fiber structure having voids or holes is well-known to those skilled in the art (see e.g. Jouannopoulos et al, "Photonic Crystals", Princeton University Press, 1995 or Broeng et al, Optical Fiber Technology, Vol. 5, pp. 305-330, 1999).

One benefit of the present invention is that it is possible to confine and guide light in the second core region at a supercontinuum of wavelengths. Thereby, the optical fiber may be used both for mode adaptation and for supercontinuum generation.

One benefit of the present invention is that it may be used for the termination of a supercontinuum, e.g. in connectorization.

One benefit of the present invention is that it may be used in the splicing of different mode field diameter nonlinear fibers as the guiding of multiple wavelength, i.e. the supercontinuum through the optical fiber allows for the low loss splicing to another nonlinear fiber.

As the mode field diameter at the first end facet is larger than the mode field diameter at the second end facet and the second longitudinal section is a highly nonlinear fiber capable of supercontinuum generation, the optical fiber may function both as a mode adapter and as a highly nonlinear fiber, preferably a single mode highly nonlinear fiber. Merging these functionalities is beneficial as the losses from splicing or otherwise combining separate components for mode adaptation and supercontinuum generation introduces losses in the optical system.

According to a further embodiment of the first aspect of the invention, the second core region is surrounded by at least four rings of thermally collapsible holes.

A ring of thermally collapsible holes may also be referred to as a layer of structure. A ring of the photonic crystal structure is not restricted to a circle but a structure surrounding the second core regio. A ring may preferably be a hexagonal ring, the number of thermally collapsible holes increasing for each ring or layer further from the core region. In a preferred variant the number of thermally collapsible holes increases with six for each adjacent layer further from the second core region.

Previously it has not been possible to realize a structure having both functionalities of mode adapting and supercontinuum generation as the thermally collapsible holes have been located solely in an inner cladding and the solid down-doped features have been located solely surrounding such thermally collapsible holes, thus the radial width of the inner cladding region has been defining for the enlarged second core region, such that no more than a few rings of thermally collapsible holes, typically three rings, were possible. However, the width of the cladding region comprising thermally collapsible holes is defining for the leakage loss in particular at long wavelengths making it unsuitable for supercontinuum spectra with wavelengths ranging from approximately 400 nm to 2500 nm.

Hence, being able to define the radial width of the second cladding region independently of the cross-sectional dimension of the first core region and/or the radial width of the first cladding region enables suitable confinement of light at any wavelength, such that a second longitudinal section of the optical fiber may be a highly nonlinear fiber suitable for supercontinuum generation.

In one variant, the formation of collapsible holes or voids in the first inner cladding of the produced optical fiber is obtained by selecting first cladding preform elements with added softeners and selecting second cladding preform elements with solid material such that application of heat to the produced spliceable optical fiber ensures that the first cladding holes and voids collapse.

In one variant, the second core region comprises material with a refractive index n_{core}, and n_{core} is larger than n₁ of the background cladding material. This allows for example to design an optical fiber with a high nonlinear coefficient, to tailor the dispersion properties of the optical fiber, and/or to tailor the cut-off properties of the optical fiber.

The thermally collapsible holes and the solid cladding features may be adapted for special dispersion and nonlinear properties, such as desired for e.g. supercontinuum generation, such as for example for blue, violet, UV, or for infrared light generation.

In one variant, the second core region comprises material with a refractive index n_{core}, and n_{core} is smaller than n₁. This allows for example the tailoring of the dispersion properties of the optical fiber, and/or the tailoring of the cut-off properties of the optical fiber.

In one variant, the second core region comprises material with a refractive index n_{core}, and n_{core} is smaller, equal to, or larger than n₂.

In one variant, the optical fiber comprises multiple cladding background material, having different refractive indices. The thermally collapsible holes may be arranged in multiple of the cladding background materials.

It is an object of the invention to provide a preform for creating an optical fiber as previously described.

In one variant, a preform according to the invention is provided wherein the core element is a pure silica rod.

In one variant, a preform according to the invention is provided wherein the core element is a rod comprising doped silica, such as Ge, Al, F, B, Er, or Yb doped silica, or combinations of these.

In one variant, the core of the optical fiber comprises doped silica, such as Ge, Al, F, B, Er, or Yb doped silica, or combinations of these.

In one preferred variant, a preform according to the invention is provided wherein the thermally collapsible holes are formed by pure silica tubes.

In one variant, a preform according to the invention is provided wherein the thermally collapsible holes are formed by tubes comprising doped silica, such as Ge, Al, F, B, Er, or Yb doped silica, or combinations of these.

In one variant, the thermally collapsible holes are formed by preform elements comprising doped silica, such as Ge, Al, F, B, Er, or Yb doped silica, or combinations of these.

In one variant, a preform according to the invention is provided wherein the second cladding elements are rods comprising an outer pure silica shell and an inner doped core, such as for example a F-doped core, or for example a B-doped core.

In one variant, a preform according to the invention is provided wherein the preform comprises an overcladding tube.

In one variant, a preform according to the invention is provided wherein the preform comprises buffer elements, such as rods and/or tubes with a smaller cross-sectional size than the second cladding elements.

In one variant, a preform according to the invention is provided wherein the preform comprises a given number of first cladding elements, and the number is in the range from 6 to 96, such as equal to 90, or such as equal to 96.

At least some of the objects of the present invention are fulfilled by providing a method of producing a spliceable optical fiber according to the invention, the method comprising drawing an optical fiber from a preform according to the invention.

At least some of the objects of the present invention are fulfilled by providing a heat-treated optical fiber comprising an optical fiber according to the invention, or a spliceable optical fiber obtainable by a method according to the invention, prepared by a heat-treatment of at least one end or a section of the spliceable optical fiber. Preferably the heat treatment occurs at the first longitudinal section and the third longitudinal section of the optical fiber.

At least some of these objects are fulfilled by providing an article comprising an optical fiber according to the invention, or an optical fiber and optical component coupling obtainable by a method according to the invention, wherein said article is a non-linear fiber component, and/or a dispersion compensating fiber component, and/or an active optical fiber component.

At least some of these objects are fulfilled by providing an article comprising an optical fiber according to the invention, or an optical fiber and optical component coupling obtainable by a method according to the invention, wherein an outer diameter of the optical fiber is substantially uniform along the axial direction.

In one embodiment, the optical fiber has at least one end being solid, i.e. the first longitudinal section, such a solid end being obtained by collapsing any holes or voids such that they are fully collapsed at the first end facet. This allows a splicing to the solid end of the optical fiber where a high temperature is applied in order to produce a high-strength splicing.

Within the present context it is intended that the term "spliceable optical fiber" is interpreted broadly to include the ability of an optical fiber to be spliced to another optical fiber or to be connected to another optical component, e.g. a connector, thereby ensuring coupling of the transmitted light to said other optical fiber or said other optical component with a reduced loss of light. It is intended that the term "an end of an optical fiber" designates a longitudinal section of the optical fiber at an end thereof, including the end face thereof.

In one variant, the optical fiber is used as an intermediate fiber, i.e. a fiber connecting two or more fibers. For example, for fiber-to-fiber splicing between dissimilar fibers, an optical fiber according to an embodiment of the present invention can be used as an intermediate fiber. The dissimilar fibers are typically different in one or more parameters, such as core diameters, core doping, index profile, etc. This allows, for example, straight intermediate fibers (none-tapered intermediate fiber and/or none-tapered dissimilar fibers). It is an advantage to use intermediate fibers with comparable or identical outer diameter as one or more of the dissimilar fibers, i.e. to match outer diameter of one or more fibers. Such matching of outer diameters increases mechanical strengths.

In a more preferrable variant, the optical fiber is used both for adaptation of the mode and for guiding of light having a small mode field diameter. As such the optical fiber may be connected to an optical component solely at the first end, i.e. the optical fiber is not used as an intermediate fiber or if the used as an intermediate fiber the connection to another optical element at the second end will not take place until the light has propagated at least a guiding length Lg along the optical fiber according to the invention, namely over a second longitudinal section of the optical fiber. In a yet more preferred variant, the optical fiber is a HNLF fiber over the second longitudinal section, such that the optical fiber may be used for SC generation in addition to the guiding of the light.

It should be noticed that tapering provides additional means for optimizing fibers according to preferred embodiments of the present invention. Hence, tapered optical fibers or sections of optical fibers according to the present invention are also covered in preferred embodiments of the present invention.

It should also be noticed that means for controlling the collapse or partial collapse of thermally collapsible holes using pressurization is also within the scope of the present invention. Also, pressurization of selected holes or voids is also within the scope of the present invention.

According to a further variant of the first aspect of the invention, the thermally collapsible holes differ from the solid cladding features at least in cross sectional dimension.

The cross-sectional dimension may be a diameter, such as for circular feature in the cladding region and/or the first cladding region. For a non-circular cross-section of a feature, the cross-sectional dimension may refer to diameter of the circle circumscribing a cross-section of the feature.

According to a further variant of the first aspect of the invention, the thermally collapsible holes differ from said solid cladding features at least in material composition. According to a further variant of the first aspect of the invention, the cladding background material extends through the first longitudinal section and the second longitudinal section. In a more preferred variant, the cladding background material extends uninterruptedly through the entirety of the optical fiber in the longitudinal direction, i.e. from the first end facet to the second end facet.

According to a further variant of the first aspect of the invention, the refractive index of the first core region and the second core region are substantially the same.

According to a further variant of the first aspect of the invention, the refractive index of the first core region and the second core region is n1 same as for the cladding background material.

According to a further variant of the first aspect of the invention, the thermally collapsible holes of the outermost ring have at least one neighboring solid cladding feature.

An object of the invention is to provide a preform for producing an optical fiber according to the invention the preform comprising longitudinal preform elements comprising:
(a) at least one core element comprising a material with refractive index n_{core};
(b) a plurality of first cladding elements comprising a tubular element of a material having refractive index n₁, said tubular element being capable of forming a collapsible hole in the optical fiber; and
(c) second cladding elements comprising a tubular element or a rod element of a solid material with refractive index n₂, said tubular or rod element being capable of forming a non-collapsible low index feature in the optical fiber;
where said elements are arranged such that an optical fiber according to the invention having thermally collapsible holes and solid cladding features can be produced from the preform.

In one variant the refractive index n_{core} is the same refractive index as n₁ being the refractive index of the cladding background material.

The optical fiber according to the first aspect of the invention may be used for generating a supercontinuum.

In a preferred variant, the generation of a supercontinuum may be performed by injecting light at the first end facet. The injected light will over the collapsed length from the first end facet be confined to a second mode field diameter, whereupon the light will propagate along the second longitudinal section wherein the fiber is a highly nonlinear optical fiber, broadening the spectrum and generating a supercontinuum which may exit the fiber at the second end facet.

Another object of the present invention is to provide a method for production of an optical fiber according to the first aspect of the invention.

According to a variant of the present invention, the above object is obtained by a method of producing an optical fiber according to the first aspect of the invention, the method comprising the steps of:
i. Providing an optical fiber having a first end facet, said optical fiber comprising:
   - a core region capable of guiding light; and
   - a microstructured cladding region surrounding said core region, said micro-structured cladding region comprising a cladding background material having a refractive index n₁ and said cladding region further comprising:
   - a first cladding region comprising solid cladding features arranged in the cladding background material, said solid cladding features being substantially solid and comprising solid down doped silica with a refractive index n₂, wherein n₂ is lower than n₁;
   - a second cladding region comprising thermally collapsible holes arranged in the cladding background material
ii. Subjecting a first longitudinal section and a third longitudinal section extending from a collapsed length from said first end facet to controlled heat treatment thereby adiabatically collapsing one or more of the thermally collapsible holes of the second cladding region over at least a part of the first longitudinal section and the third longitudinal section.

It is an object of the invention to provide an optical fiber comprising a first longitudinal section adapted for guiding light with a first mode field diameter and a second longitudinal section adapted for guiding light with a second mode field diameter, the second mode field diameter being smaller than the first mode field diameter, wherein the first longitudinal section comprises
- an first core region, capable of guiding light with a first mode field diameter,
- a first end cladding region, surrounding said second core region, said first end cladding region comprising solid features having refractive index n₂,
wherein the fiber at the second longitudinal section is a highly nonlinear fiber comprising
- a second core region capable of guiding light with a second mode field diameter,
- a second cladding region surrounding said second core region, said second cladding region comprising thermally collapsible holes arranged in a cladding background material having refractive index n₁ and said second end cladding region further comprising solid feature having refractive index n₂,
and wherein said fiber at the first longitudinal section and said fiber at the second longitudinal section are connected by a third longitudinal section and the combined length of said first longitudinal section and said third longitudinal section being a collapsed length wherein the mode field diameter is adiabatically tapered from said first mode field diameter to said second mode filed diameter by controlled collapsing of said thermally collapsible holes over the third longitudinal section.

In a preferred variant of such an optical fiber, the first mode field diameter is larger than the second mode filed diameter.

In a preferred variant of such an optical fiber, the second core region is made of silica glass. In a more preferred variant, the first core region is also made from silica glass.

In a preferred variant of such an optical fiber, the solid features of the first end cladding region are down doped silica, preferably F-doped silica.

In a preferred variant of such an optical fiber, the cladding background material is silica glass.

In a preferred variant of such an optical fiber, the thermally collapsible holes are fully collapsed at the first end.

In a preferred variant of such an optical fiber, the second core region and the second end cladding region form a highly nonlinear fiber capable of generating a supercontinuum.

It is an object of the invention to provide an optical fiber comprising:
- a first longitudinal section adapted for guiding light with a first mode field diameter, the first longitudinal section comprising:
   - a first core region of a solid material,
   - a first cladding region, said first cladding region surrounding said first core region, the effective refractive index of said first cladding region being dominated by doped features having refractive index n₂;
- a second longitudinal section adapted for guiding light with a second mode field diameter and generating a supercontinuum,
   - a second core region of a solid material, said second core region having a different cross-sectional dimension than said first core region,
   - a second cladding region, said second cladding region surrounding said second core region, the effective refractive index of said second end cladding region being dominated by thermally collapsible holes,
a third longitudinal section connecting said first longitudinal section and said second longitudinal section, said thermally collapsible holes being at least partially collapsed over said third longitudinal section.

In a preferred variant of such an optical fiber, both the first and second core regions are made from silica glass.

In a preferred variant of such an optical fiber, the doped features are solid cladding features arranged in a background cladding material. In another preferred variant of such an optical fiber, the doped features may form a second background cladding material.

In a preferred variant of such an optical fiber, the second core region has a smaller cross-sectional dimension than the first core region.

In a preferred variant of such an optical fiber, the second cladding region comprises both thermally collapsible holes and solid cladding features being doped features.

In a preferred variant of such an optical fiber, the second cladding region comprises thermally collapsible holes arranged in a first holey material and thermally collapsible holes arranged in a second holey material. By a holey material is understood a material surrounding the collapsible holes and which may function as a background material for a segment of the cladding region. In a preferred variant an inner cladding region has a first holey material and an outer cladding region surrounding the inner cladding region has a second holey material. More preferably, the first hole material is silica glass while the second holey material is down-doped silica, such as F-doped silica. In such variants the entirety of the first cladding region, i.e. both the inner cladding region and the outer cladding region comprise thermally collapsible holes while only the outer cladding region comprises doped features taking the form of a second holey material. In other words in the inner cladding region the thermally collapsible holes are arranged in silica while in the outer cladding region the thermally collapsible holes are arranged in down-doped silica.

According to a further variant the objects of the present invention are achieved by an optical fiber comprising at least a first end with a first end facet, said optical fiber comprising:
(a) a second core region capable of guiding light; and
(b) a microstructured cladding region surrounding said second core region, said micro-structured cladding region comprising a cladding background material having a refractive index n₁ and said cladding region comprising:
   (b1) a first cladding region comprising first cladding features arranged in the cladding background material, said first cladding features comprising thermally collapsible holes or voids; and
   (b2) a second cladding region comprising solid cladding features arranged in the cladding background material, said solid cladding features being substantially solid and having a refractive index n₂,
   wherein n₂ is lower than n₁, and
   wherein said thermally collapsible holes or voids of at least a part of said first cladding features are at least partially collapsed at said first end over a collapsed length from said first end facet.

Other objects, features and advantages of the present invention will be more readily apparent from the detailed description of the preferred embodiments set forth below, taken in conjunction with the accompanying drawings.

It is to be understood that the following detailed description is merely exemplary of the invention and is intended to provide an overview or framework for understanding the nature and character of the invention as it is claimed. The accompanying figures are included to provide further understanding of the invention and are incorporated in and constitute a part of the disclosure of the invention. The invention is not limited to the described examples. The figures illustrate various features and embodiments of the invention and together with the description serve to explain the principles and operation of the invention.

In the present examples the feature in the form of holes and voids are shown in cross sectional views as circles wherein a diameter is generally used to indicate the size or maximum inner dimension of the feature. It is intended that the holes or voids may exhibit any form in which case the relevant dimension for its characterization is its maximum, inner dimension.

### BRIEF DESCRIPTION OF THE DRAWINGS

The invention will be explained more fully below in connection with preferred embodiments and with reference to the drawings in which:
Figs. 1a and 1b schematically illustrate an embodiment of an optical fiber according to the invention shown in a transverse view.
Fig. 2 shows a cross-sectional view of the same embodiment as illustrated in Figs. 1a including schematic indications of the various regions of the optical fiber.
Figs. 3a and 3b schematically illustrate an embodiment of an optical fiber according to the invention shown in transverse view.
Fig. 4 shows a semi-transparent perspective view of a fiber according to the invention.
Figs. 5a and 5b show a schematic overview of an example embodiment of the invention from a sideview and a cross-sectional view respectively, while Fig. 5c exemplary illustrates the tapering of the mode propagated by the optical fiber.
Figs. 6a and 6b show cross-sectional views of a schematic example of an embodiment of the invention wherein the second longitudinal section of the fiber is a multi-core fiber.

All figures are schematic and may be simplified for clarity.

### DETAILED DESCRIPTION OF THE INVENTION

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

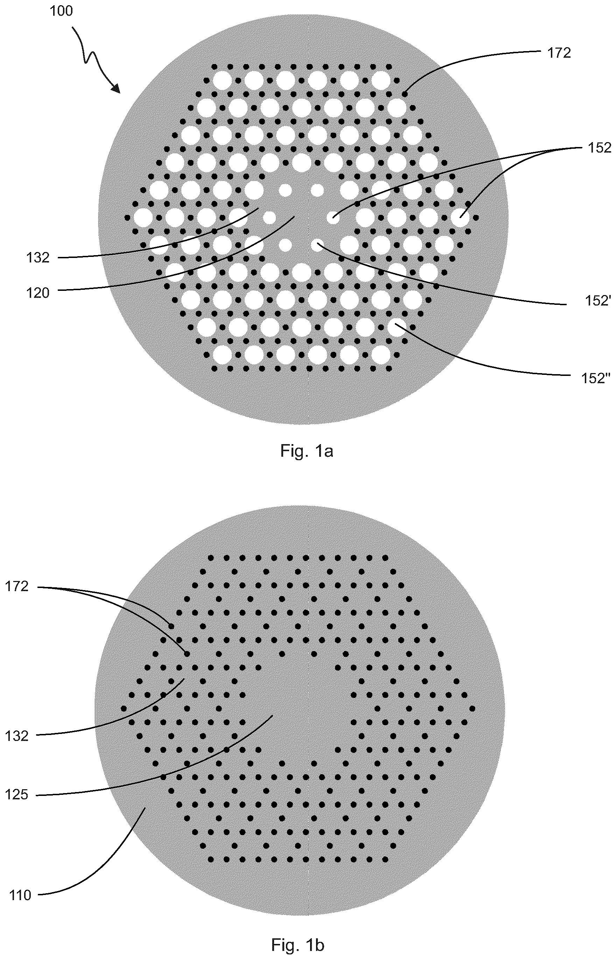

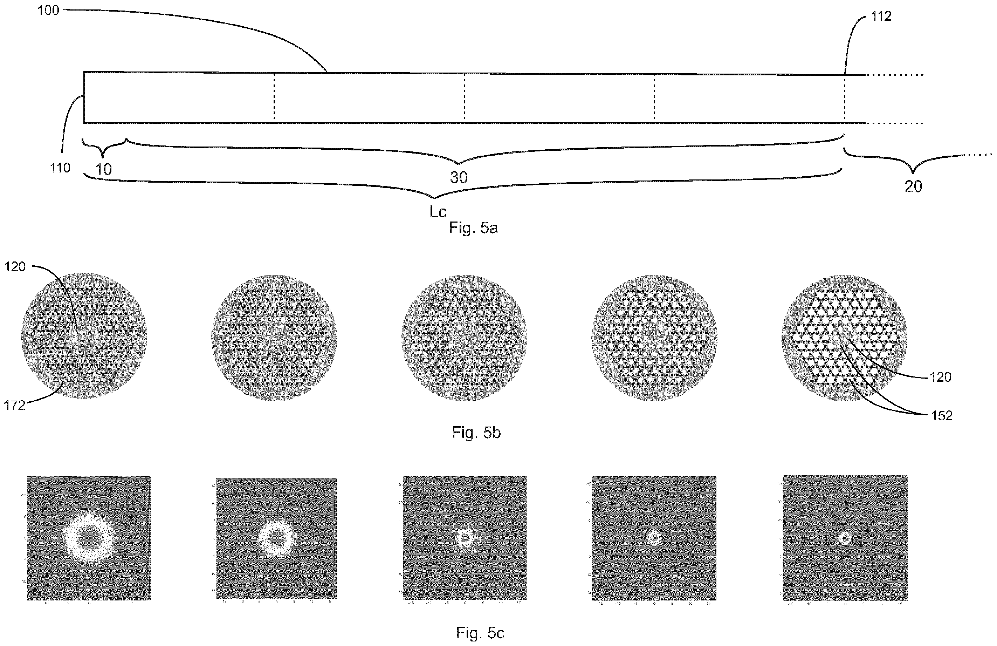

Figs. 1a and 1b show transversal views of an embodiment of an optical fiber 100 according to the invention at two different positions along the length of the optical fiber. Fig. 1b shows a crosse-sectional view of the optical fiber 100 where the thermally collapsible holes have been fully collapsed as seen from an end view of the first end facet 110 or at any position along the first longitudinal section 10 (see Fig. 5a). Fig. 1a shows a cross-sectional view of the second longitudinal section 20 (see Fig. 5a) of optical fiber 100, i.e. at a distance further than the collapsed length from the first end facet 111, where none of the thermally collapsible holes 152 have been or have begun collapsing.

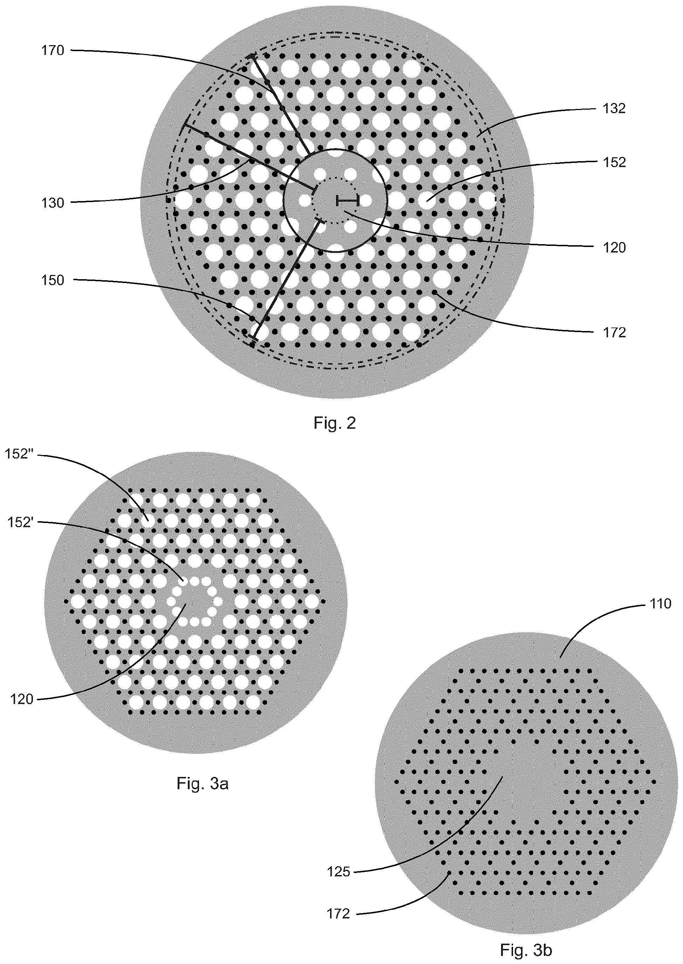

The embodiment of an optical fiber 100 shown in Figs. 1a and 1b is a micro-structured fiber also called a photonic crystal fiber. Along the second longitudinal section shown as a cross section in Fig. 1a, the optical fiber comprises a second core region 120 for guiding light having a second MFD in the longitudinal direction along the optical fiber 100. The second core region 120 is surrounded by a cladding region 130 (see Fig. 2) which may be divided into a second cladding region 150 and a first cladding region 170 (see Fig. 2), the second cladding region 150 and the first cladding region 170 at least partially overlapping in a radial direction. The second cladding region 150 comprises a plurality of thermally collapsible holes 152 (illustrated as white circles) dispersed in a cladding background material 132 (illustrated as grey background). The cladding background material 132 has a refractive index n₁. The cladding region 130 further comprises solid cladding features 172 (illustrated as black circles) also dispersed in the cladding background material 132 and the solid cladding features 172 being arranged in the first cladding region 170 (see Fig. 2 where the various regions are marked). The solid cladding features 172 are substantially solid structures having a refractive index n₂ being lower than the refractive index n₁ of the cladding background material.

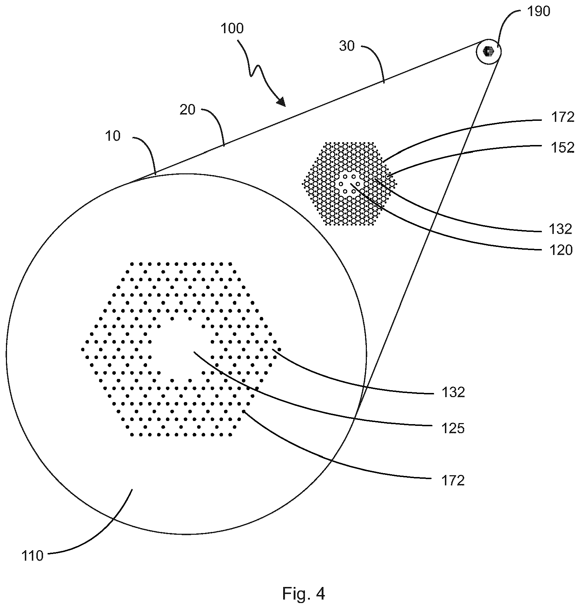

The thermally collapsible holes 152152 and the solid cladding features 172 are interspersed for at least a part of the radial direction of the cladding region 150. In other words, the thermally collapsible holes 152 may be considered a first photonic crystal structure and the solid cladding features 172 may be considered a second photonic crystal structure, the two photonic crystal structures overlapping. The thermally collapsible holes 152 and the solid cladding features 172 are arranged such that the thermally collapsible holes 152 are dominating the refractive index of the cladding region 130 at least at all longitudinal positions where the thermally collapsible holes 152 remain uncollapsed, i.e. throughout the second longitudinal section 20. Hence, for the length of the optical fiber 100 being further from the first end facet 110 than the collapsed length Lc (see Fig. 4) the effective refractive index of the cladding region 130 is dominated by the thermally collapsible holes 152 whereby light travelling along the length of the optical fiber 100 along the second longitudinal section 20, will be confined to the second core region 120 by the thermally collapsible holes 152. The thermally collapsible holes 152 are arranged to confine the light to a second mode having a second MFD in the second core region 120.

The second cladding region 150 may comprise either a single type of thermally collapsible holes or it may comprise multiple types of thermally collapsible holes. The embodiment shown in Fig. 1a comprises a first type of thermally collapsible holes 152' and a second type of thermally collapsible holes 152" 152. The cross-sectional dimension of the holes 152first type of thermally collapsible holes 152' and the second type of thermally collapsible holes 152" differs, preferably by the diameter of the first type of thermally collapsible holes 152' being smaller than the diameter of the second type of thermally collapsible holes 152". In the embodiment of Fig. 1a, the diameter of the innermost ring of thermally collapsible holes 152 is the first type of thermally collapsible holes 152' having a smaller diameter than the remaining thermally collapsible holes being the second type of thermally collapsible holes 152". Such a configuration allows control of the collapse of thermally collapsible holes 152 as the thermally collapsible holes 152 having the smallest diameter will collapse first when all of the thermally collapsible holes 152 are subjected to the same heat treatment. Thereby it may be ensured that the first type of thermally collapsible holes 152' will fully collapse while the second type of first innermost cladding features 152" may have shrunk but remain at least partially open at some longitudinal positions along the third longitudinal section 30 (see Fig. 5a), such that an adiabatic transition between the first mode confined in the first core region 125 and the second mode confined in the second core region 120 may be achieved.

The different types of thermally collapsible holes 152 may differ in various ways. They may differ in dimensions such as is the case in the embodiment shown in Figs. 1-3, i.e. a first type of thermally collapsible holes may have one diameter while the second type of thermally collapsible holes has another diameter while both types thermally collapsible holes are otherwise made in the same manner, e.g. they may both be holes.

In other embodiments the first type of thermally collapsible holes may be filled with one type of gas while the second type of thermally collapsible holes may be holes filled with another type of gas or be under vacuum. As shown in Fig. 3a the first and second types of thermally collapsible holes may also have different pitches.

Fig. 2 shows the same embodiment of a micro-structured optical fiber 100 and at the same cross-sectional position as shown in Figs. 1a. In Fig. 2 the various regions have been marked in the radial direction to more clearly illustrate how the second cladding region 150 and the first cladding region 170 partially overlap in the radial direction.

The second core region 120 is illustrated as being delimited by a dotted circle in Fig. 2, as mentioned the second core region 120 is surrounded by the cladding region 130. Hence, the radial beginning of the cladding region 130 may be considered the radially innermost point where the features of the cladding region 130 are present, i.e. where thermally collapsible holes 152 are present, and the cladding region 130 extends from this point to the point where the radially outermost cladding features are present, this may also be considered the radially innermost point of the first ring or first layer of thermally collapsible holes 152 of the photonic crystal structure. For the embodiment illustrated in Fig. 2 this means that the cladding region 130 extends from the dotted ring to the dash-dotted ring, i.e. from the sketched ring with the smallest diameter to the sketched ring with the largest diameter. The cladding region 130 comprises a cladding background material. In some preferred embodiments the cladding background material is the same material as the material of the second core region.

The cladding region 130 is divided into a second cladding region 150 and a first cladding region 170. The second cladding region 150 is the part of the cladding region 130 comprising the thermally collapsible holes 152, hence in Fig. 2 the second cladding region 150 is the region extending from the dotted ring to the dashed ring. The first cladding region 170 is the part of the cladding region 130 comprising the solid cladding features 172, hence in Fig. 2 the first cladding region 170 is the region extending from the solid ring to the dash-dotted ring. As is apparent the second cladding region 150 and the first cladding region 170 partially overlap in the radial direction. Part of the second cladding region 150 is closer to the center than the first cladding region 170, while the first cladding region 170 extends further form the center than the second cladding region 150. For the part of the cladding region 130 where the second cladding region 150 and the first cladding region 170 overlap the thermally collapsible holes 152 and the solid cladding features 172 are interspersed.

The overlapping nature of the second cladding region 150 and the first cladding region leads to the interspersed nature of the features of the cladding regions, i.e. the thermally collapsible holes 152 and the solid cladding features 172. Hence, in preferred embodiments the majority of the thermally collapsible holes 152 have at least one neighboring solid cladding feature 172. In some preferred embodiments as the ones shown in Figs. 1a and 3a each of the second type of thermally collapsible holes 152" has at least one neighboring solid cladding feature 172. In other preferred embodiments some of the second type of thermally collapsible holes 152" may be without neighboring solid cladding features 172, while the majority of the thermally collapsible holes 152 do have a solid cladding feature 172 as a neighbor. As the solid cladding features 172 confine the first mode to the first core region 125, the placement of the solid cladding features 172 determine the second MFD while the thermally collapsible holes 152 determine the MFD of the first mode the MFD of the first and second modes may be independently engineered by altering the photonic crystal structures of the second cladding region 150 and the first cladding region 170.

In preferred embodiments of the invention at least one thermally collapsible hole 152 will be surrounded by solid cladding features 172. By the thermally collapsible hole 152 being surrounded by solid cladding features 172 may be understood that the thermally collapsible hole is placed at the center of a hexagonal structure of thermally collapsible holes 172.

Fig. 1b shows an idealized end view of the embodiment of the optical fiber 100 looking onto the first end facet 110. At the first longitudinal section 10 (see Fig. 5a) of the shown embodiment, no thermally collapsible holes are present as all of the thermally collapsible holes have been collapsed. Hence, at the first longitudinal section 10, the optical fiber 100 may in preferred embodiments as the one shown in Fig.1b be a solid structure comprising a first core region 125 substantially surrounded or encircled by a first cladding region, wherein the first cladding region comprises a plurality of solid cladding features 172 arranged in a cladding background material 132 whereby a first mode having a first mode field diameter is confined to the first core region 125 by the solid cladding features 172.

In preferred embodiments, such as the ones shown in Fig. 1b and 3b, the solid cladding features 172 are arranged as a honeycomb structure. Such embodiments may have the solid cladding features arranged to form a plurality of hexagonal structures. Such embodiments may have the solid cladding features 172 arranged as a number of rows having alternating pitches. In a preferred variant the nominal pitch of one subset of rows is twice the nominal pitch of the other subset of rows. It will be understood by the person skilled in the art, that since the photonic crystal structure of the solid cladding features 172 of the first longitudinal section 10 is what remains after the thermally collapsible holes have been collapsed along the third longitudinal section 30, the arrangement may not be fully symmetric as seen in the idealized structures shown in the figures, hence the actual pitch and placement may vary from the nominal pitch and placement of the solid cladding features due to the contractions occurring as the thermally collapsible holes are collapsed.

As the holes 152 of the second cladding region 150 have all been collapsed, it is the refractive index n₂ of the solid cladding features 172 which dominates the effective refractive index of the cladding region of the optical fiber 100 along the first longitudinal section10 and which confines the light guided in the longitudinal direction to the first mode. Since the thermally collapsible holes were located radially closest to the center of the optical fiber 100, the first core region 125 along the first longitudinal section extended from the second core region 120 all the way to the innermost part of the first cladding region 170 in the illustrated embodiment. Thus, the diameter of the first core region 125 is larger than the diameter of the second core region 120, whereby the mode field diameter of the light guided along the length of the optical fiber 100 is also expanded as the thermally collapsible holes are collapsed and the solid cladding features 172 dominate the effective refractive index of the cladding region 130 instead of the thermally collapsible holes dominating.

In a preferred embodiment the cladding background material 132 is silica, such that the refractive index n₁ is n_{SiO2}.

In a preferred embodiment, the thermally collapsible holes 152 are structures void of solid material, preferably these thermally collapsible holes 1522 are air-filled such that the refractive index of the thermally collapsible holes is nₐᵢᵣ. In other embodiments, the thermally collapsible holes 152 may be filled with another gas.

In a preferred embodiment, the solid cladding features 172 are made from fluorine doped silica, such that the refractive index of the solid cladding features 172 n₂ is n_{F-SiO2}. In other embodiments the solid cladding features 172 may be otherwise down-doped silica.

In a more preferred embodiment, the cladding background material 132 is silica, the thermally collapsible holes 152 are air-filled voids and the solid cladding features 172 are fluorine doped silica. In a yet more preferrable embodiment, the second core region 120 is made from silica, such that the refractive index n_{core} of the second core region 120 and the refractive index of the cladding background material 132 n₁ is the same.

In some embodiments the enlarged second core region may comprise multiple materials, e.g. a material having refractive index n_{core} and a first cladding background material having refractive index n₁. In some embodiments it may be preferrable that the refractive indices n_{core} and n₁ are of similar magnitude.

Figs. 3a and 3b show transversal views of an embodiment of an optical fiber 100 according to the invention at two different positions along the length of the optical fiber, the photonic crystal structures of the embodiment of Fig. 3 is different to that of Figs. 1 and 2 but the cross-sectional positions are the same. In particular, the embodiment shown in Fig. 3a differs from that of Fig. 1a in the arrangement of the thermally collapsible holes 152.

As shown in Fig. 3a the optical fiber 100 comprises a second core region 120 surrounded by a cladding region 130. The cladding region 130 comprises a second cladding region 150 and a first cladding region 170. The second cladding region comprises a first type of thermally collapsible holes 152' and a second type of thermally collapsible holes 152". The first 152' and the second type of thermally collapsible holes 152" 152differ both in their cross-sectional dimensions and in their arrangement. The first type of thermally collapsible holes 152' is the innermost ring of holes 152, i.e. the ring of thermally collapsible holes 152 closest to the center of the optical fiber 100. This first type of thermally collapsible holes 152' has a diameter which is smaller than the diameter of the second type of thermally collapsible holes 152" and the first type of thermally collapsible holes 152' is arranged with a smaller pitch than the second type of thermally collapsible holes 152".

In a preferred embodiment, the pitch of the first type of thermally collapsible holes 152' is half the pitch of the second type of thermally collapsible holes 152", as shown in Fig. 3a. Such a configuration supports the single mode propagation of light in the second core region 120 while simultaneously ensuring that the first type of thermally collapsible holes 152' will collapse before the second type of thermally collapsible holes 152" when subjected to heat such that the collapse may be adiabatic.

Fig. 3b shows the first end face 110 at the first longitudinal section 10 of the optical fiber 100 where all of the thermally collapsible holes 152 have been collapsed, such that a first core region 125 is formed and the solid cladding features 172 dominate the effective refractive index of the cladding region. Note that for the particular embodiments shown in Figs. 1b and 3b the end facets 110 at the first longitudinal section 10 of the optical fiber are shown identical as the difference between these embodiments resides in the configuration of the thermally collapsible holes 152 such that when they are collapsed the resulting structure remains the same. The structures are identical as they are shown in an idealized manner, however, it will be understood by the person skilled in the art that in reality there may be some difference caused by the difference between the arrangement of the thermally collapsible holes as this will affect the contraction and movement of the cladding background material when the thermally collapsible holes are collapsed.

Fig. 4 shows a semi-transparent perspective view of a fiber according to an embodiment of the invention, schematically illustrating how the photonic crystal structure may change along the length of the optical fiber 100. In the shown embodiment, the first end facet 110 at the first longitudinal section of the optical fiber is a solid structure comprising a first core region 125 surrounded by a plurality of solid cladding features 172 dispersed in a cladding background material 132.

At the second longitudinal section, beginning a collapsed length Lc from the first end facet 110 and extending to the second end facet 190, the photonic crystal structure maintains the solid cladding features 172 and further comprises a plurality of thermally collapsible holes 152 surrounding the second core region 120 such that it may confine a second mode of light having a second MFD to the second core region 120.

The solid cladding features 172 are arranged to extend from the first end facet 110 to the second end facet 190 of the optical fiber 100. Thus, solid cladding features 172 are present throughout the first longitudinal section, the second longitudinal section and the third longitudinal section. Ideally the solid cladding features 172 maintain the same pattern along the full length of the optical fiber while it will be understood by the person skilled in the art that the heat treatment and thermal collapse of the thermally collapsible holes 152 may in practice lead to warping of the positioning of the solid cladding features 172 e.g. by decreasing the distance between solid cladding features 172 previously separated by a thermally collapsible holes 152. Meanwhile, the thermally collapsible holes 152 will change along at least a subpart of the length of the optical fiber 100 such that the photonic crystal fiber structure differs at the first end facet 111 and the second end facet 190 of the optical fiber 100. In some preferred embodiments there will be no thermally collapsible holes 152 at the first longitudinal section 10 of the optical fiber, while for other embodiments some or all of the thermally collapsible holes 152 may be present at the first longitudinal section 10 but having been altered e.g. by having a decreased diameter or by a subset having been completely collapsed while another subset of thermally collapsible holes remain present having a decreased diameter.

A third longitudinal section 30 extends between the first longitudinal section 10 and the second longitudinal section 20. The collapse of the thermally collapsible holes 152 take place along the extend of the third longitudinal section 30. Hence it is understood that the photonic crustal structure will change along the third longitudinal section 30, e.g. by the cross-sectional dimensions of the thermally collapsible holes 152 changing.

Figs. 5a-5c show the relation between the longitudinal position along the length of the optical fiber 100 and the development of the microstructure in particular illustrating the adiabatic collapse of the thermally collapsible holes 152 along the third longitudinal section 30 such that the thermally collapsible holes 152 are collapsed over a collapsed length Lc from the first end facet 110152.

Fig. 5a shows a side view of the part of the optical fiber 100 closest to the first end facet 111. Fig. 5b shows schematic cross-sectional views of the optical fiber at various positions (marked by dashed lines on Fig. 5a) along the longitudinal direction of the optical fiber 100. Fig. 5c shows exemplary illustrations of the development of the mode at the various positions marked along the optical fiber 100 in Fig. 5a as the mode field diameter is tapered.

Fig. 5a schematically shows the first longitudinal section 10, and part of the second longitudinal section 20 as well as the third longitudinal section 30 being arranged between the first longitudinal section 10 and the second longitudinal section 30, the illustration is not to scale. The collapsed length includes the length of the first longitudinal section and the length of the second longitudinal section. The longitudinal position of the optical fiber 100 being the collapsed length Lc from the first end facet 110 may be called the first open end 112. The first open end 112 may be considered the longitudinal position closest to the first end facet 110 of the optical fiber where the holes or voids of the PHC are uncollapsed, in other words where none of the holes 152 have begun collapsing such that all holes may be considered open. The first open end may be seen as the interface between the second longitudinal section 20 and the third longitudinal section 30. The second longitudinal section 20 is the part of the optical fiber 100 extending beyond the collapsed length L_{C} to a second end facet of the optical fiber (not shown in Fig. 5c). second longitudinal section

As mentioned, the illustration of Fig. 5a is not to scale. In a preferred embodiment, the distance between the first end facet 111 and the second end facet 190 of the optical fiber is more than twice the collapsed length Lc. In other words, for such preferred embodiments the second longitudinal section is longer than the combined length of the first longitudinal section and the third longitudinal section, such as twice as long more preferably five times as long. In an exemplary embodiment the first longitudinal section 10 may have a length in the range of about 20-80 µm, the third longitudinal section 30 over which the collapse of the thermally collapsible holes takes place may have a length in the range of about 50-200 µm, and the second longitudinal section 20 may have a length in the range of about 1-5mm.

By having a configuration where the second longitudinal section 20 is longer than the collapsed length Lc, the optical fiber 100 according to the invention may be used both as a mode adapter for converting the mode and as a fiber for guiding light to a desired site. Thus, it may be sufficient to perform a splice at the first end facet 110 to connect the optical fiber 100 according to the invention to an optical component, such as a standard optical fiber, while a second splice may be foregone at the first open end 112 as the optical fiber 100 itself may continually guide light along the second core region 20. Thus, the optical fiber 100 according to the present invention may provide an optical solution with decreased loss.

The second longitudinal section of the optical fiber may for preferred embodiments be a nonlinear optical element capable of generating an SC by broadening the spectrum of input light. Hence, the second longitudinal section 20 may form a highly nonlinear fiber suitable for generating a supercontinuum, such that the optical fiber 100 according to the present invention may be used both for adapting a first mode having a first MFD to a second mode having a second MFD and for the generation of a supercontinuum.

For the embodiment illustrated in Figs. 5a-5c all of the thermally collapsible holes 152 152152are collapsed at the first end facet 110 such that the optical fiber is a solid structure along the first longitudinal section 10. For this embodiment the collapsed structure of the first longitudinal section comprises a first core region 125 surrounded by solid cladding features 172 arranged in a cladding background material 132 such that a first mode may be confined to the first core region 125.

At the second longitudinal section 20, the optical fiber 100 comprises both a second cladding region and a first cladding region, the second cladding region and the first cladding region at least partially overlapping in the radial direction such that at least a subset of the thermally collapsible holes 152 and a subset of the solid cladding features 172 are interspersed. 152 Hence, at the first open end 112 and throughout the second longitudinal section 20, the optical fiber comprises both thermally collapsible holes 1522 and solid cladding features 172 being down-doped silica.

In preferred embodiments, such as the one shown in Fig. 5b, the collapse of the thermally collapsible holes 152 is gradual along the third longitudinal section 30 such that the collapse may be adiabatic. Hence, the cross-sectional dimension of the thermally collapsible holes is decreased closer to the first longitudinal section 10 of the optical fiber until they are completely collapsed. At the second longitudinal section 20 the refractive index of the thermally collapsible holes 152 will dominate the effective refractive index of the optical fiber and the MFD of the second mode will be dictated by the dimensions of the second core region 120. As the diameter of the thermally collapsible holes 1522 decreases closer to the first longitudinal section, so will their effect on the effective refractive index until the thermally collapsible holes 152 no longer dominate the effective refractive index which will instead be dominated by the solid cladding features 172. Hence, as the refractive index of the solid cladding features n₂ is lower than the refractive index n₁ of the cladding background material, the effective refractive index of the cladding region will be lower throughout the first longitudinal section 10 than throughout the second longitudinal section 20. As the innermost features of the cladding region at the first open end 112 are thermally collapsible holes 152they will collapse and closed due to heating of the first and third longitudinal sections and the MFD guided by the optical fiber will be larger at the first longitudinal section 10 than at the second longitudinal section 20 being tapered along the third longitudinal section 30.

The tapering of the mode field diameter is conceptually illustrated in Fig. 5c showing how the mode field diameter is larger at the first end facet 110 than at the first open end 112. The MFD of the first mode which may be guided along the first longitudinal section 10 is larger than the second mode which may be guided along the second longitudinal section 20.

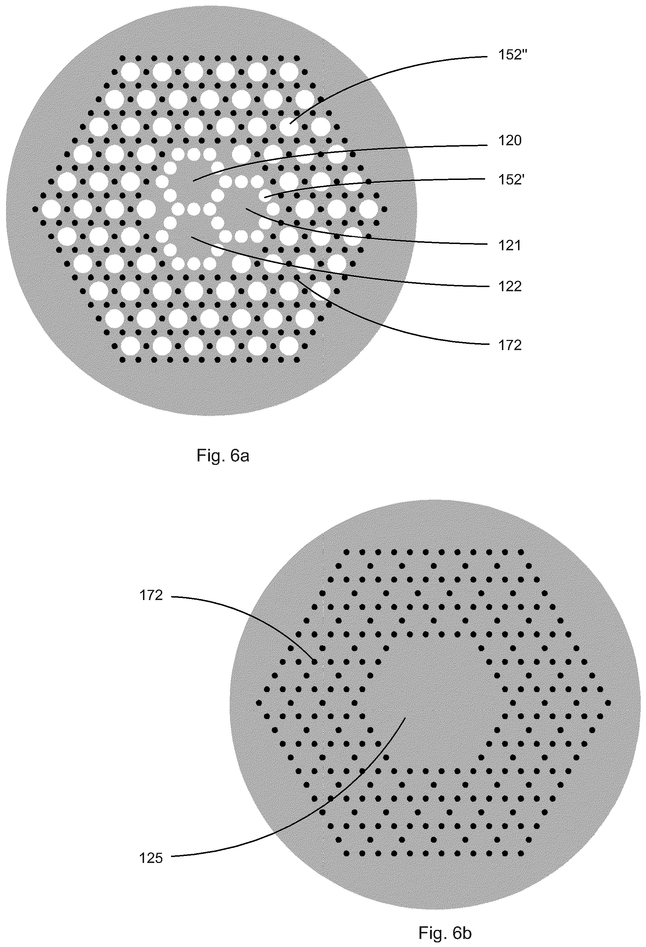

Figs. 6a and 6b schematically illustrate transversal views of an embodiment of an optical fiber 100 according to the invention at two different positions along the length of the optical fiber, Namely, Fig. 6a shows a cross-sectional view of the second longitudinal section while Fig. 6b shows a cross-sectional view of the first longitudinal section of the optical fiber.

Fig. 6a illustrates an embodiment of an optical fiber according to the present invention configured to guide a plurality of substantially identical second modes along the second longitudinal section. Thet second longitudinal section of this embodiment is a multicore fiber. The second longitudinal section comprises a first type of thermally collapsible holes 152' and a second type of thermally collapsible holes. The first type of thermally collapsible holes 152' are arranged to form a plurality of parallel core regions inside each of which may be confined a mode to be guided along the second longitudinal section. In preferred embodiments such as the one illustrated in Fig. 6a, each of the plurality of core regions of the second longitudinal section have the same cross-sectional dimensions. Preferably the cross-sectional dimensions of the first type of thermally collapsible holes 152' is smaller than the cross-sectional dimensions of the second type of thermally collapsible holes 152'. As shown in Fig. 6a the second longitudinal section may comprise a second core region 120, a third core region 121 and a fourth core region 122 each delimited by a hexagonal structure of a first type of thermally collapsible holes 152'. A mode may be considered to be confined to each of the three core regions 120,121,122 by at least four rings or four layers of thermally collapsible holes 152, the first ring being provided by the first type of thermally collapsible holes 152' and three rings being provided by the second type of thermally collapsible holes 152".

In other embodiments the first type of thermally collapsible holes 152' may be otherwise arranged to form a multicore fiber with a plurality of the parallel core regions. The plurality of parallel core regions may have identical dimensions such that they may confined modes having the same MFD. In other embodiments the plurality of core regions may have different cross-sectional dimensions.

Fig. 6b shows the idealized positioning of the solid core feature 172 at the first longitudinal section where they are arranged to confine a first mode having a first MFD to a first core region 125.

## Claims

1. An optical fiber configured for mode adaption, said optical fiber comprising:
- a first longitudinal section extending from a first end facet, said first longitudinal section being configured to guide a first mode having a first mode field diameter (MFD);
- a second longitudinal section extending from a second end facet, said second longitudinal section being configured to guide a second mode having a second mode field diameter (MFD);
- a third longitudinal section located between and connecting said first longitudinal section and said second longitudinal section;
- a cladding background material having a refractive index n₁ extending throughout said optical fiber;
- a first cladding region comprising solid cladding features arranged in the cladding background material, said solid cladding features having a refractive index n₂, wherein n₂ is lower than n₁, said first cladding region being configured to confine said first mode of said first longitudinal section to a first core region,
- a second cladding region comprising thermally collapsible holes arranged in the cladding background material, said second cladding region being configured to confine said second mode to one or more second core regions;
wherein said first cladding region extends along said optical fiber, and wherein said first core region extends along said first longitudinal section; and
wherein said second cladding region extends along said second longitudinal section and said second core region extends along said second longitudinal section; and
wherein said third longitudinal section comprises at least partially collapsed thermally collapsible holes.

2. The optical fiber according to claim 1, said first cladding region and said second cladding region at least partially overlapping in the radial direction along said second longitudinal section, such that said thermally collapsible holes and said substantially solid cladding features are interspersed.

3. The optical fiber according to any of the previous claims, wherein said first MFD is larger than said second MFD.

4. The optical fiber according to any of the previous claims, configured for guiding light of wavelengths in the range of about 400 nm to about 2500 nm.

5. The optical fiber according to any of the previous claims, said second longitudinal section comprising a plurality of parallel core regions each configured to guide a mode having a second mode field diameter.

6. The optical fiber according to any of the previous claims, said second cladding region comprising a first type of thermally collapsible holes and a second type of thermally collapsible holes.

7. The optical fiber according to claim 6, the majority of said first type of thermally collapsible holes being arranged closer to the center of the of the optical fiber than the majority of said second type of thermally collapsible holes.

8. The optical fiber according to any of the claims 6-7, said first type of thermally collapsible holes having smaller cross-sectional dimensions than said second type of thermally collapsible holes.

9. The optical fiber according to any of the claims 6-8, a majority of said first type of thermally collapsible holes being arranged with a smaller pitch than a majority of said second type of thermally collapsible holes.

10. The optical fiber according to any of the previous claims, said second longitudinal section of the optical fiber being a highly nonlinear fiber configured to generate a supercontinuum.

11. The optical fiber according to any of the previous claims, the majority of said thermally collapsible holes of said second longitudinal section having a neighboring solid cladding feature.

12. The optical fiber according to any of the previous claims, at least one thermally collapsible hole of the second longitudinal section being surrounded by solid cladding features.

13. The optical fiber according to any of the previous claims, wherein said second core region is surrounded by at least four rings of thermally collapsible holes.

14. The optical fiber according to any of the previous claims, said substantially solid cladding features being arranged in rows having alternating pitch.

15. The optical fiber according to any of the previous claims, wherein a plurality of solid cladding features have at least three neighboring thermally collapsible holes at positions along the second longitudinal section.
